Europäisches Patentamt

European Patent Office

Office européen des brevets

(11) Veröffentlichungsnummer: **0 486 891 A1**

# EUROPÄISCHE PATENTANMELDUNG

(21) Anmeldenummer: **91119028.8**

(22) Anmeldetag: **07.11.91**

(51) Int. Cl.5: **H05B 3/26**, H05B 3/28, F24D 13/02

(30) Priorität: **19.11.90 DE 4036848**

(43) Veröffentlichungstag der Anmeldung:
**27.05.92 Patentblatt 92/22**

(84) Benannte Vertragsstaaten:
**AT BE CH DE FR GB IT LI LU NL**

(71) Anmelder: **BUCHTAL GmbH**
**Buchtalweg**
**W-8472 Schwarzenfeld(Opf.)(DE)**

(72) Erfinder: **Bard, Martin**
**Eichenforstgässchen 9**
**W-8450 Amberg(DE)**
Erfinder: **Cremer, Gottfried, Dr.**
**Steyrer Weg 6**
**W-5000 Köln 40(DE)**

(74) Vertreter: **Herrmann-Trentepohl, Werner,**
**Dipl.-Ing. et al**
**Kirschner, Grosse, Bockhorni Forstenrieder**
**Allee 59**
**W-8000 München 71(DE)**

(54) **Beheizbarer Belag aus keramischen Deckplatten.**

(57) Ein beheizbarer Belag aus keramischen Deckplatten, an deren der Sichtseite abgewandten Fläche
eine elektrisch leitende Beschichtung angeordnet ist,
besteht aus zumindest teilweise in den Trägerkörper
für die keramischen Deckplatten oder in der der
Sichtseite abgewandten Fläche der Deckplatte eingebetteten Leiterelement bzw. Leiterelementen und
einer Haftschicht zwischen Leiterelement und Deckplatte.

Fig 4

Die Erfindung betrifft einen beheizbaren Belag aus keramischen Deckplatten, der auf seiner der Sichtseite abgewandten Fläche eine elektrisch leitende Beschichtung aufweist.

Derartige beheizbare Beläge aus keramischen Deckplatten sind bekannt (EP-B-0 231 913). Hierbei ist die Beschichtung durch Einbettung elektrisch leitfähiger Teilchen leitfähig gemacht worden oder in der Beschichtung ist ein Heizleiterelement eingebettet, so daß infolge einer Widerstanderwärmung die keramische Deckplatte gewünscht beheizt werden kann.

Bei der Verwendung von Heizleiterkabeln für die Beheizung von beispielsweise Bodenbelägen besteht ein Problem in einer sicheren Anbindung der üblicherweise aus einem leitenden Drahtkern und einem diesen Drahtkern umgebenden Isoliermantel bestehenden Heizkabeln an der keramischen Deckplatte, da für die Schaffung beheizbarer Bodenbeläge die keramischen Deckplatten vom Hersteller her bereits einbaufertig mit den Heizkabeln zu versehen sind. Abgesehen davon sind die handelsüblichen Heizleiterkabel nicht an den speziellen Einsatzzweck der Beheizung eines keramischen Bodenbelags angepaßt, was bedeutet, daß die handelsüblichen Heizleiterkabel aufgrund ihrer Querschnittsabmessungen entscheidend die Bauhöhe des Bodenbelags bestimmen, wobei diese Bauhöhe durch den Haftkleber überbrückt werden muß. Neben dieser in Kauf zu nehmenden Bauhöhe bringt dies auch den Nachteil mit sich, daß infolge der zu überbrückenden Bauhöhe der Kleber entsprechend auf Schubfestigkeit ausgelegt werden muß, so daß nur bestimmte spezielle Klebermischungen für derartige beheizbare Bodenbeläge verwendet werden können.

Aufgabe der Erfindung ist es, einen beheizbaren Belag aus keramischen Platten zu schaffen, der frei ist von den beschriebenen Nachteilen, d.h. eine sichere Anbindung von Heizleitern an keramischen Deckplatten bei baulich kompakter Ausführung des Bodenbelags gewährleistet.

Diese Aufgabe wird erfindungsgemäß dadurch gelöst, daß die Heizleiter als Leiterelemente, insbesondere als Heizleiterkabel in Ausnehmungen eines die keramische Deckplatte aufnehmenden Trägerkörpers oder in der der Sichtseite abgewandten Fläche der keramischen Deckplatte selbst zumindest teilweise eingebettet sind, wobei eine Haftschicht zwischen den Leiterelementen und der keramischen Deckplatte vorgesehen ist.

Durch diese Maßnahmen wird nicht nur eine Entkoppelung der Heiz- und Hafteigenschaften am Belag erreicht, sondern es resultiert auch eine verminderte Bauhöhe des Belags, der sich im übrigen infolge eines Verzahnungseffekts zwischen Trägerkörper, Leiterelement und Haftschicht sowie gegebenenfalls Deckplatte durch eine gute Verbindung der Elemente des Bodenbelags auszeichnet. Ein weiterer Vorteil des erfindungsgemäßen Belags ist darin zu sehen, daß nurmehr eine vergleichweise dünne Kleberschicht erforderlich ist, die sich naturgemäß gegenüber einer dickeren Klebeschicht durch eine erhöhte Scherfestigkeit auszeichnet, so daß auch insoweit sich Vorteile in der Auswahl des geeigneten Klebers ergeben.

Die Erfindung erlaubt es insbesondere, konventionelle Leiterelemente in Art von Leiterkabeln zu verwenden, die aus einem leitenden Kern und einem diesen Kern umgebenden Isoliermantel gebildet sind. Alternativ kann auch ein Leiterelement aus Draht verwendet werden, so dieses Leiterelement umgeben von einer Isolierschicht in eine Ausnehmung eingebettet ist. Zweckmäßigerweise werden Haftschicht und Isolierschicht als Einheit aus demselben Material hergestellt, wobei sich hier insbesondere ein Zwei-Komponenten-Kleber, und zwar insbesondere ein modifizierter PU-Schaum empfiehlt. Um die Wärmeableitung nach unten in die Unterkonstruktion möglichst gering zu halten, ist es zweckmäßig, den Trägerkörper aus schlecht wärmeleitendem Material herzustellen.

Nachfolgend werden bevorzugte Ausführungsbeispiele anhand der Zeichnung beschrieben Darin zeigen

Fig. 1     einen Teil (gebrochen) einer im Schnitt dargestellten Ausführungsform eines Bodenbelags,

Fig. 2     eine abgewandelte Ausführungsform analog Fig. 1,

Fig. 3     eine weitere abgewandelte Ausführungsform analog Fig. 1 sowie

Fig 4     eine weitere abgewandelte Ausführungsform analog Fig. 1.

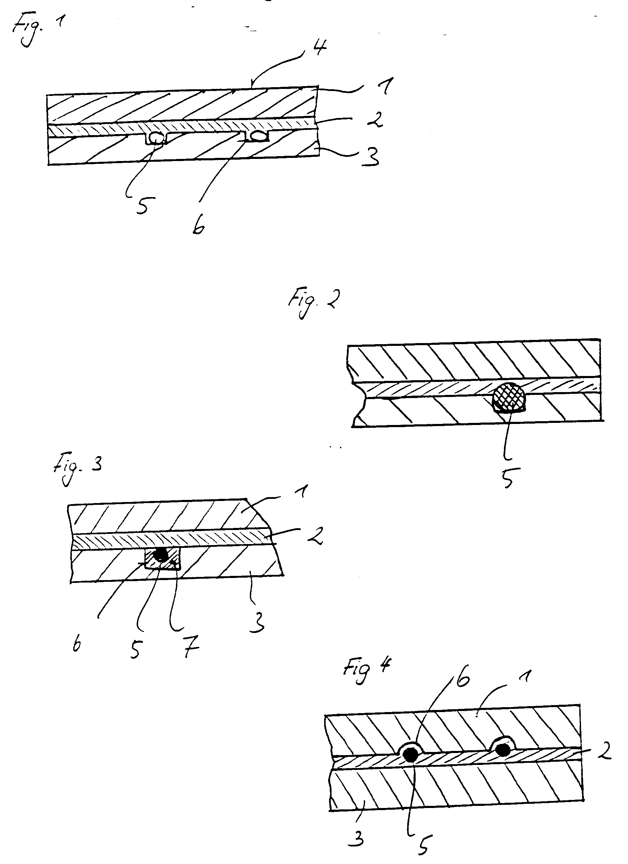

Fig. 1 zeigt nur einen gebrochenen Teil eines Bodenbelags im Schnitt bestehend aus einer keramischen Deckplatte 1 und einer Haftschicht 2, mittels der die keramische Deckplatte 1 auf einem Trägerkörper 3 befestigt ist. Die Sichtseite der keramischen Deckplatte 1 ist mit 4 bezeichnet. Zur Beheizung der keramischen Deckplatte 1 dient ein allgemein mit 5 bezeichneter Heizleiter, der in Bahnen bzw. mäanderförmig unterhalb der keramischen Deckplatte 1 angeordnet, insbesondere über die Haftschicht 2 an dieser angebunden ist. Der Tragkörper 3 kann durch die Unterbodenkonstruktion selbst gebildet sein, ist aber insbesondere eine Trägerplatte aus Holz, Kunststoff, keramischem Material oder dgl.. Bei der Anwendung der Ausführungsform für eine Doppelbodenkonstruktion kann der Trägerkörper 3 aus Leichtbeton, insbesondere einer Anhydridschicht gebildet sein, die ggf. in einem stabilen Rahmen, wie etwa einer Wanne aus Blech aufgenommen ist.

An der der keramischen Deckplatte 1 zugewandten Seite des Trägerkörpers 3 sind Ausnehmungen zur Aufnahme des Leiterelements 5 vorgesehen, wobei diese Ausnehmungen 6 zweckmäßigerweise durch Nuten gebildet sind, die entweder nachträglich in den Trägerkörper 3 eingearbeitet oder unmittelbar mit der Herstellung des Trägerkörpers vorgesehen sein können. Diese Ausnehmungen 6 dienen zur Aufnahme des Heizleiters 5, der in der Ausführungsform nach Fig. 1 mit seinem Querschnitt insgesamt in der Ausnehmung bzw. Nut 6 eingebettet ist, hingegen bei der Ausführungsform nach Fig. 2 nur teilweise, so daß ein Teil des Querschnitts des Leiterelements 5 nach Fig. 2 über die obere Seite des Trägerkörpers 3 nach oben hin vorsteht.

Die Haftschicht 2 ist zweckmäßigerweise aus einem wärme- und alterungsbeständigen Kleber, insbesondere einem Zwei-Komponenten-Kleber, wie beispielsweise PU-Schaum gebildet, der bei der Ausführungsform nach Fig. 1 auch in die Ausnehmungen 6 und somit zwischen Leiterelement 5 und Trägerkörper 3 eindringt. Dadurch ergibt sich eine sehr gute Haftung einerseits zwischen keramischer Deckplatte 1 und Trägerkörper 3 und insbesondere andererseits zwischen Leiterelement 5 und keramischer Deckplatte 1, wobei infolge der Einbettung des Leiterelements 5 zwischen den Elementen des Bodenbelags ein Verzahnungseffekt erzielt wird, der die Haftung intensiviert.

Zugleich wird infolge der Einbettung erreicht, daß für die Kleberschicht 2 keinerlei Überbrückungsfunktion hinsichtlich der Dicke der Leiterelemente erfüllen muß, sondern die Dicke der Kleberschicht alleine nach der gewünschten Haftfähigkeit ausgelegt werden kann, so daß sich insgesamt ein vergleichsweise dünner Haftschichtbelag ergibt, was höhere Festigkeitswerte mit sich bringt.

Für den Heizleiter können konventionelle Fertigelemente, insbesondere Heizleiterkabel verwendet werden, die üblicherweise aus einer elektrisch leitenden Seele aus Draht und einen die Seele umgebenden Isoliermantel bestehen.

Bei der Ausführungsform nach Fig. 3 kann auf den Isoliermantel für den Heizleiter verzichtet werden, da bei dieser Ausführungsform das Leiterelement 5 in eine Isolierschicht 7 innerhalb der Ausnehmung 6 eingebettet ist, die einerseits der Befestigung des Leiterelements 5 am Trägerkörper 3 und andererseits für die elektrische Isolierung sowie auch für die Wärmeisolierung des Leiterelements 5 dient. Bei dieser Ausführungsform kann bei Bedarf das Leiterelement 5 auch über den Trägerkörper 3 nach oben vorstehen, wodurch sich ein erhöhter Verzahnungseffekt zwischen den einzelnen Lagen ergibt. Hierbei ist es zweckmäßig, einen Kleber mit elektrisch isolierenden Eigenschaften zu verwenden.

Bei der Ausführungsform nach Fig. 4 sind auf der der Sichtfläche 4 abgewandten Seite der keramischen Deckplatte 1 entsprechende Ausnehmungen 6 vorgesehen, in welche teilweise das in die Haftschicht 2 eingebettete Leiterelement 5 vorsteht, wodurch sich wiederum ein entsprechender Verzahnungseffekt zwischen den einzelnen Lagen ergibt.

**Patentansprüche**

1. Beheizbarer Belag aus keramischen Deckplatten (1), an deren der Sichtseite abgewandten Fläche eine elektrisch leitende Beschichtung angeordnet ist, bestehend aus zumindest teilweise in den Trägerkörper (3) für die keramische Deckplatten (1) oder in der der Sichtseite (4) abgewandten Fläche der Deckplatte (1) eingebetteten Leiterelement bzw. Leiterelementen (5) und einer Haftschicht (2) zwischen Leiterelement (5) und Deckplatte (1).

2. Belag nach Anspruch 1, **dadurch gekennzeichnet,** daß das Leiterelement (5) von einer Isolierschicht umgeben ist.

3. Belag nach Anspruch 1 oder 2, **dadurch gekennzeichnet**, daß das Leiterelement (5) durch ein gegebenenfalls mäanderförmiges Leiterkabel aus einem leitenden Kern und einem diesen umgebenden Isoliermantel gebildet ist.

4. Belag nach einem der Ansprüche 1 bis 3, **dadurch gekennzeichnet**, daß das Leiterelement (5) in einer Ausnehmung (6), insbesondere einer Nut des Trägerkörper (3) oder der Deckplatte (1) angeordnet ist.

5. Belag nach einem der vorhergehenden Ansprüche, **dadurch gekennzeichnet**, daß das Leiterelement (5) vollständig in die Nut (6) eingelegt ist.

6. Belag nach einem der Ansprüche 1 bis 4, **dadurch gekennzeichnet**, daß das Leiterelement (5) derart in die Nut eingebettet ist, daß das Leiterelement mit einem Teil seines Querschnitts über der Nut (6) nach oben hin vorsteht.

7. Belag nach einem der vorhergehenden Ansprüche, **dadurch gekennzeichnet,** daß das Leiterelement (5) in einer isolierenden Masse (7) in der Nut (6) eingebettet ist.

8. Belag nach einem der vorhergehenden Ansprüche, **dadurch gekennzeichnet**, daß Haftschicht (2) und Isolierschicht (7) als Einheit aus demselben Material gebildet sind.

9. Belag nach einem der vorhergehenden Ansprüche, **dadurch gekennzeichnet**, daß als Isolier- und/oder Haftschicht ein Zwei-Komponenten-Kleber, insbesondere ein modifizierter PU-Schaum verwendet wird.

10. Belag nach einem der vorhergehenden Ansprüche, **dadurch gekennzeichnet,** daß der Trägerkörper (3) aus einem schlecht wärmeleitenden Material gebildet ist.

Fig. 1

4

1

2

3

5

6

Fig. 2

5

Fig. 3

1

2

6  5  7

3

Fig 4

6  1

2

3  5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 540 717 (ZDENEK, A.)<br><br>* Abbildung 4 *<br><br>--- | 1,2,4,5,<br>7,8,10 | H05B3/26<br>H05B3/28<br>F24D13/02 |
| A | GB-A-224 321 (GRIERSON LTD)<br>* Seite 2, Zeile 5 - Zeile 10 *<br><br>--- | 3 | |
| A | CH-A-106 154 (GRAU, H.)<br>* Abbildung 4 *<br><br>--- | 6 | |
| A | FR-A-2 008 334 (GAISER ET AL.)<br>* Seite 8, Zeile 33 - Zeile 36 *<br><br>----- | 9 | |
| | | | **RECHERCHIERTE SACHGEBIETE (Int. Cl.5)**<br><br>H05B<br>F24D |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1992 | Gagliardi |